# FASCICULE DE BREVET EUROPEEN

(11) **EP 3 086 235 B1**
(45) Date de publication et mention de la délivrance du brevet: **01.04.2020**
(21) Numéro de dépôt: 16166334.9
(22) Date de dépôt: 21.04.2016
(51) Int. Cl.: G06F 12/14

(54) **PROCÉDÉ DE CONTRÔLE SYSTÉMATIQUE DES ADRESSES DE ZONES MÉMOIRE DANS LE CADRE D'UN TRANSFERT PAR ACCÈS DIRECT**
VERFAHREN ZUR SYSTEMATISCHEN KONTROLLE DER ADRESSEN VON SPEICHERZONEN IM RAHMEN EINES TRANSFERS ÜBER DIREKTZUGANG
METHOD FOR CONTROLLING IN A SYSTEMATIC WAY MEMORY AREA ADDRESSES IN THE FRAME OF A DIRECT ACCESS TRANSFER

(30) Priorité: 22.04.2015 FR 1500854
(43) Date de publication de la demande: 26.10.2016
(73) Titulaire: THALES, 92400 Courbevoie (FR)
(72) Inventeur: Duprez, Adrien, 92622 Gennevilliers Cedex (FR); Grisal, Olivier, 92622 Gennevilliers Cedex (FR); Saliba, Eric, 92622 Gennevilliers Cedex (FR); Delove Alexandre, 92622 Gennevilliers Cedex (FR)
(74) Mandataire: Lavoix

(56) Documents cités:
- WO-A1-2013/095461
- US-A1- 2004 205 203
- US-A1- 2011 153 873
- US-A1- 2014 173 236

## Description

La présente invention concerne un procédé de contrôle systématique. La présente invention concerne aussi un dispositif de contrôle adapté pour la mise en œuvre du procédé de contrôle. La présente invention se rapporte également à un produit programme d'ordinateur et à un support d'information associés.

Un transfert par accès direct (en anglais *direct memory access*) est un procédé informatique dans lequel des données sont échangées entre un organe d'émission et de réception de données tel qu'un périphérique matériel externe connecté à une plateforme et une zone mémoire de la plateforme sans intervention d'un processus tiers.

De telles zones mémoires sont classiquement gérées par une unité de gestion mémoire (en anglais *memory management unit* ou *MMU*). Une telle unité de gestion mémoire permet notamment de contrôler les accès aux zones mémoires d'un processus informatique, tel qu'un programme informatique référençant des adresses mémoires virtuelles. Pour cela, l'unité de gestion mémoire traduit les adresses mémoire virtuelles référencées par le programme informatique en adresses physiques correspondant aux zones mémoires utilisées.

En outre, pour assurer un transfert de données par accès direct entre un applicatif s'exécutant sur une plateforme et un périphérique matériel externe connecté à la plateforme, il est connu de faire transiter les données par un contrôleur d'interface accédant directement aux zones mémoires concernées.

Cependant, un tel contrôleur d'interface est susceptible de présenter des faiblesses au niveau de la gestion et de l'utilisation des adresses physiques référencées dans les champs des données transférées, ce qui peut entraîner un transfert de données illicites vers des zones mémoires interdites via les zones mémoires en accès direct.

Le document US 2014/173236 A1 décrit un procédé pour protéger une portion de mémoire système pouvant être accédées par des périphériques externes.

Le document US 2004/205203 A1 divulgue, quant à lui, un vecteur d'exclusion utilisé par un accès DMA qui définit un ensemble de pages qui ne peuvent être accédées par les circuits externes accédant en direct à la mémoire système. Le kernel sécurisé assure ainsi un isolement en permettant à certaines pages d'être exclues des accès DMA.

Il existe donc un besoin pour un procédé de contrôle systématique permettant de détecter le transfert de messages illicites vers des zones mémoires interdites.

La présente invention est définie par les revendications indépendantes jointes auxquelles il convient de se référer. Des caractéristiques avantageuses sont exposées dans les revendications dépendantes. Les modes de réalisation ou exemples décrits dans la présente description ci-dessous qui ne sont pas couverts par les revendications sont considérés comme ne faisant pas partie de l'invention.

D'autres caractéristiques et avantages de l'invention apparaîtront à la lecture de la description qui suit de modes de réalisation de l'invention, donnée à titre d'exemple uniquement et en référence aux dessins qui sont :
- figure 1, une vue schématique d'un exemple d'un transfert de données par accès direct entre un applicatif s'exécutant sur une plateforme et un périphérique matériel externe relié à la plateforme,
- figure 2, une vue schématique d'un exemple d'un transfert de données par accès direct entre un applicatif s'exécutant sur une plateforme et un périphérique matériel externe relié à la plateforme selon un premier mode de réalisation, les données transférées étant contrôlées par un dispositif de contrôle,
- figure 3, une vue schématique d'un exemple d'un transfert de données par accès direct selon un deuxième mode de réalisation, et
- figure 4, une vue schématique d'un exemple d'un transfert de données par accès direct selon un troisième mode de réalisation.

Dans la suite de la description, les données illustrées sur les figures sont des lignes de code informatique et/ou des adresses nommées de manière arbitraire.

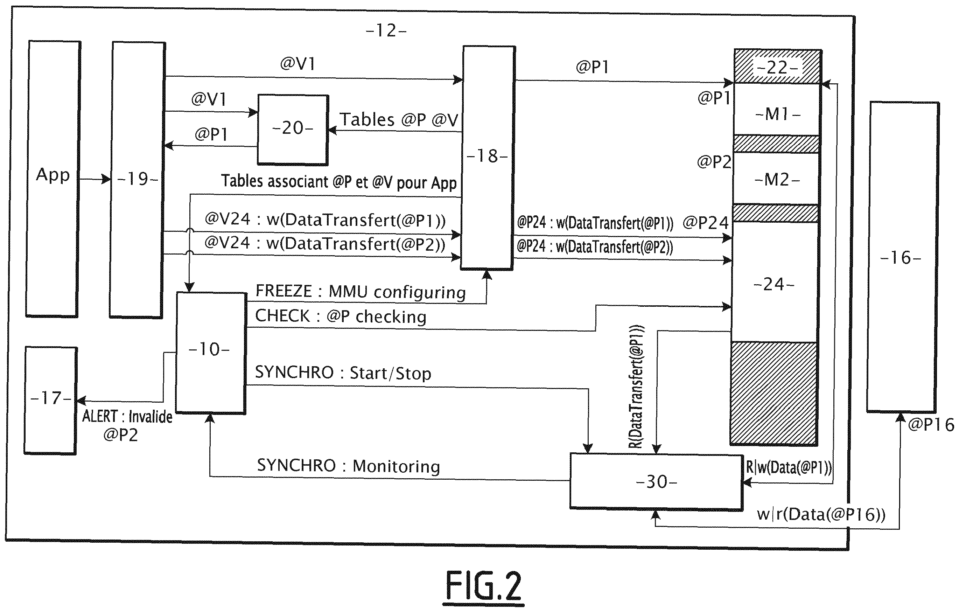

Un dispositif de contrôle 10 est représenté sur les figures 2, 3 et 4.

Le dispositif de contrôle 10 est adapté pour la mise en œuvre d'un procédé de contrôle systématique d'au moins un message de configuration de transfert. Le message de configuration de transfert est un message de configuration d'un transfert par accès direct depuis un applicatif App s'exécutant sur une plateforme 12 vers au moins une zone mémoire M1, M2 utilisée par au moins un périphérique matériel externe 16 reliée à la plateforme 12 par un contrôleur d'interface 30.

Le message de configuration comprend au moins un champ et un corps.

Le champ du message de configuration comprend des informations relatives à l'adresse physique @P1, respectivement @P2, d'une première zone mémoire M1, respectivement d'une deuxième zone mémoire M2, destinée à au moins un transfert de données par accès direct. Chaque zone mémoire M1, M2 est, en effet, caractérisée par une adresse physique unique.

Le corps du message de configuration comprend des informations relatives à des actions à effectuer sur la première zone mémoire M1, respectivement sur la deuxième zone mémoire M2.

Le message de configuration est propre à être mémorisé dans une structure 24 de contrôle des transferts. La structure 24 est utilisée par le contrôleur d'interface 30 pour réaliser des transferts de données sur la première zone mémoire M1, respectivement sur la deuxième zone mémoire M2, par accès direct à l'adresse physique @P1 de la première zone mémoire M1, respectivement à l'adresse physique @P2 de la deuxième zone mémoire M2, référencées dans la structure 24.

La structure 24 est renseignée par l'applicatif App via un pilote d'interface 19 (en anglais *driver*).

Les zones mémoires M1, M2 et la structure 24 sont gérées par une unité de gestion mémoire 18 (en anglais *memory management unit* ou *MMU*). Les règles d'accès (en anglais *memory mapping*) de l'applicatif App à la structure 24 sont configurables par le dispositif de contrôle 10. L'applicatif App ne dispose pas des droits de configuration de l'unité de gestion mémoire 18. L'applicatif App accède en lecture et en écriture à la structure 24 via le pilote d'interface 19 et l'unité de gestion mémoire 18.

A titre d'illustration, la première zone mémoire M1 est une zone mémoire autorisée pour l'applicatif App et la deuxième zone mémoire M2 est une zone mémoire interdite pour l'applicatif App.

La structure 24 est également subdivisée en blocs mémoires gérés par l'unité de gestion mémoire 18.

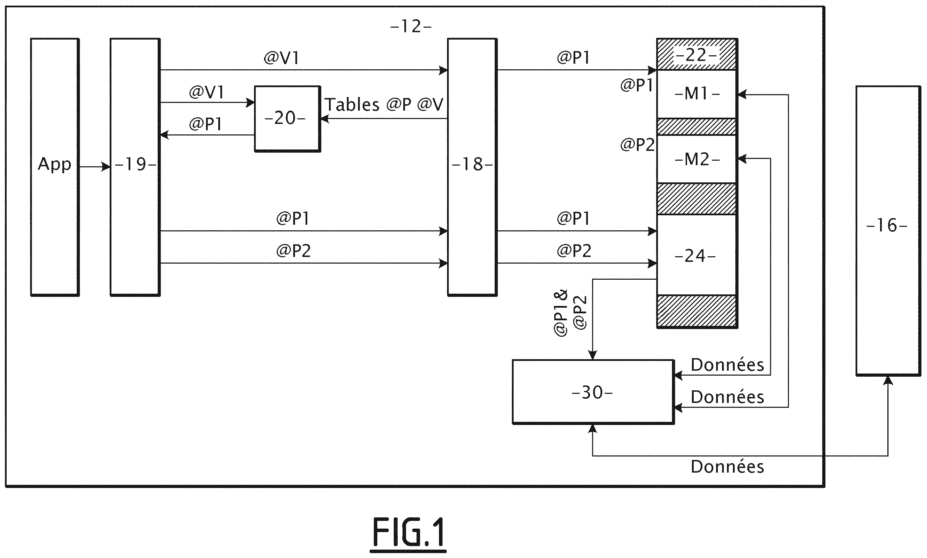

Les informations contenues dans le message de configuration sont susceptibles d'entraîner des actions sur des zones mémoires interdites. De telles actions sont, par exemple, dues à une absence de contrôle par l'unité de gestion mémoire 18 des adresses physiques des zones mémoires contenues dans le champ du message et/ou à des transferts de données non gérés par l'unité de gestion mémoire 18. La réalisation d'actions sur des zones mémoires interdites est, en particulier, illustrée sur la figure 1 où un message adressant la deuxième zone mémoire M2 est transmis à la deuxième zone mémoire M2 alors même que la deuxième zone mémoire M2 est interdite pour l'applicatif App.

L'une des fonctions du dispositif de contrôle 10 est d'empêcher un ou des transferts de données illicites depuis l'applicatif App vers le périphérique externe 16 via les zones mémoires M1, M2 internes à la plateforme 12. Réciproquement, le dispositif de contrôle 10 est configuré pour empêcher les transferts de données illicites depuis le périphérique externe 16 vers l'applicatif App.

Pour empêcher de tels transferts de données illicites entre l'applicatif App et le périphérique externe 16, le dispositif de contrôle 10 met en œuvre au moins l'une des fonctions suivantes :
- une fonction de vérification, illustrée par la référence « CHECK » sur les figures 2 à 4, des messages de configuration écrits, par l'applicatif App via le pilote d'interface 19, dans la structure 24 avant la lecture et le traitement desdits messages par le contrôleur d'interface 30.
- une fonction de synchronisation, illustrée par la référence « SYNCHRO » sur les figures 2 à 4, des traitements en cours effectués par le contrôleur d'interface 30 sur les données de la structure 24. La synchronisation comprend, par exemple, un contrôle de l'état d'avancement des traitements effectués par le contrôleur d'interface 30 et/ou de mise en marche ou en arrêt des traitements effectués par le contrôleur d'interface 30 sur la structure 24.
- une fonction de verrouillage, illustrée par la référence « FREEZE » sur les figures 2 à 4, des messages contrôlés par le dispositif de contrôle 10 jusqu'au traitement desdits messages par le contrôleur d'interface 30, de façon à garantir la non modification par l'applicatif App ou par le pilote d'interface 19 des messages de transferts vérifiés par le dispositif de contrôle 10,
- une fonction d'alerte, illustrée par la référence « ALERT » sur les figures 2 à 4, vers un système d'exploitation 17 (en anglais *Operating System*) en cas de détection d'anomalies dans les adresses de transfert contenues dans les messages de transfert mémorisés dans la structure 24 et vérifiés par le dispositif de contrôle 10.
- une fonction de configuration du dispositif de contrôle 10 avec une politique de sécurité.

La fonction de synchronisation mise en œuvre par le dispositif de contrôle 10 permet de contrôler que la fonction de vérification des messages de configuration est systématiquement invoquée et réalisée avant le traitement des messages par le contrôleur d'interface 30.

La fonction de verrouillage est mise en œuvre par le dispositif de contrôle 10 via deux mécanismes utilisables de façon exclusive ou concurrente.

Le premier mécanisme repose sur l'utilisation par le dispositif de contrôle 10 de la configuration de l'unité de gestion mémoire 18. Ainsi, le dispositif 10 assure un verrouillage interdisant l'accès de l'applicatif App à un bloc mémoire de la structure 24, un tel bloc mémoire contenant les messages de configuration déjà vérifiés par le dispositif 10. Le verrouillage est maintenu jusqu'au traitement desdits messages par le contrôleur d'interface 30. Une fois les messages traités, le dispositif 10 configure à nouveau l'unité de gestion mémoire 18 pour déverrouiller l'accès audit bloc mémoire de la structure 24 et verrouiller un nouveau bloc mémoire de la structure 24 contenant de nouveaux messages de configuration de transferts vérifiés par le dispositif de contrôle 10.

Le procédé selon le premier mécanisme est illustré schématiquement sur la figure 2.

Le second mécanisme repose sur le calcul et le stockage par le dispositif de contrôle 10 de motifs d'intégrité pour un ou plusieurs messages de configuration de transfert vérifiés par le dispositif de contrôle 10. Les motifs d'intégrité sont mémorisés dans une zone mémoire spécifique 25 de la plateforme 12 de sorte que seul le dispositif de contrôle 10 ait accès à ladite zone mémoire spécifique 25. Les motifs d'intégrité sont contrôlés juste avant le traitement des messages par le contrôleur d'interface 30.

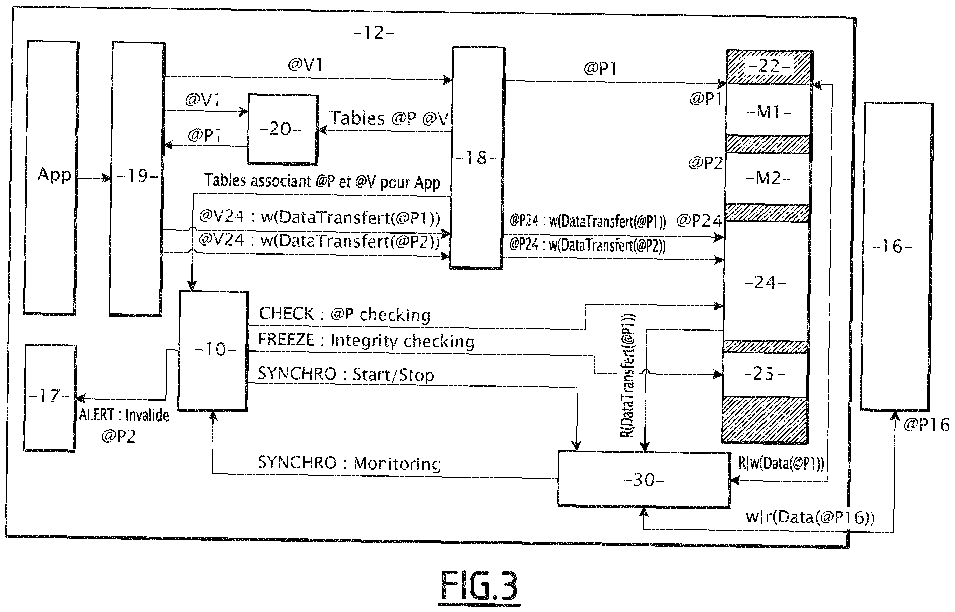

Le procédé selon le second mécanisme est illustré schématiquement sur la figure 3.

Le dispositif de contrôle 10 est propre à arrêter et à redémarrer le contrôleur d'interface 30 de sorte que le contrôleur d'interface 30 traite seulement les messages vérifiés par le dispositif de contrôle 10 suite à la mise en œuvre du premier mécanisme et/ou du deuxième mécanisme décrits précédemment.

La fonction de vérification du dispositif de contrôle 10 permet de contrôler que les adresses référencées dans la structure 24 sont conformes à une politique de sécurité. En cas de détection d'une anomalie, le dispositif de contrôle 10 réalise un traitement de neutralisation et/ou génère une exception. La neutralisation consiste, par exemple, à remplacer les adresses interdites par des adresses référençant une zone mémoire invalide ou une zone mémoire contrôlée par le seul dispositif de contrôle 10.

Le dispositif de contrôle 10 appartient à la plateforme 12.

En variante, le dispositif de contrôle 10 appartient au périphérique matériel externe 16.

Le dispositif de contrôle 10 est, selon l'exemple des figures 2 à 4, un produit programme d'ordinateur. Le produit programme est, par exemple, un programme informatique tel qu'un logiciel, un logiciel embarqué ou un microcode (en anglais *firmware*).

L'interaction du programme d'ordinateur avec la plateforme 12 permet de mettre en œuvre le procédé de contrôle.

Le produit programme d'ordinateur est mémorisé sur un support d'informations. Le support d'informations est un support lisible sur une unité de traitement de données.

L'applicatif App est un ensemble de programmes informatiques propres à s'exécuter sur la plateforme 12. La plateforme 12 est propre à échanger des informations avec un périphérique 16 par l'intermédiaire du pilote d'interface 19. Le pilote d'interface 19 est un programme informatique permettant à un autre programme d'interagir avec un périphérique au moyen d'un contrôleur d'interface.

La plateforme 12 comprend une ou plusieurs interfaces physiques reliant le ou les périphériques 16 à la plateforme 12.

La plateforme 12 est, par exemple, une plateforme matérielle telle qu'un ordinateur, un équipement matériel, un système sur puce (en anglais *System on Chip* ou SoC) ou un composant électronique dédié (en anglais *Application Specific Integrated Circuit ou* ASIC) ou une plateforme logicielle telle qu'un hyperviseur, les couches d'abstraction de l'hyperviseur associées avec une plateforme matérielle, et/ou des machines virtuelles.

Dans le cas d'une plateforme 12 matérielle, le dispositif de contrôle 10 est intégré dans un microcode, configurable ou non, dans le système d'exploitation, par exemple, dans des pilotes d'interface, ou directement dans l'implémentation matérielle.

Dans le cas d'une plateforme logicielle, le dispositif de contrôle 10 est intégré dans l'hyperviseur ou dans les couches d'abstraction de l'hyperviseur associées à une plateforme matérielle, ou dans le système d'exploitation.

Dans les modes de réalisation illustrés sur les figures 1 à 4, la plateforme 12 comprend un module de conversion 20.

Le module de conversion 20 est propre à associer à chaque adresse virtuelle une adresse physique correspondant à une zone mémoire M1, M2. Une adresse virtuelle est une adresse de la mémoire virtuelle qu'un système d'exploitation met à disposition de ses processus pour que lesdits processus s'exécutent. Une adresse physique est un nombre binaire représentant un emplacement dans une mémoire centrale 22 de la plateforme 12.

Le périphérique externe 16 comprend, par exemple, un support de stockage d'informations permettant de mémoriser des données numériques, par exemple une clé USB, ou un support de transfert d'informations permettant d'échanger des informations avec la plateforme 12, par exemple une liaison Ethernet.

Le périphérique 16 est, par exemple, relié à la plateforme 12 via un protocole USB (de l'anglais *Universal Serial Bus,* traduit en français par *Bus Universel en Série*) ou via un protocole Ethernet.

Le périphérique 16 utilise une pluralité de zones mémoires M1, M2.

Les zones mémoires M1, M2, la structure 24 et la zone mémoire spécifique 25 sont propres à mémoriser des données.

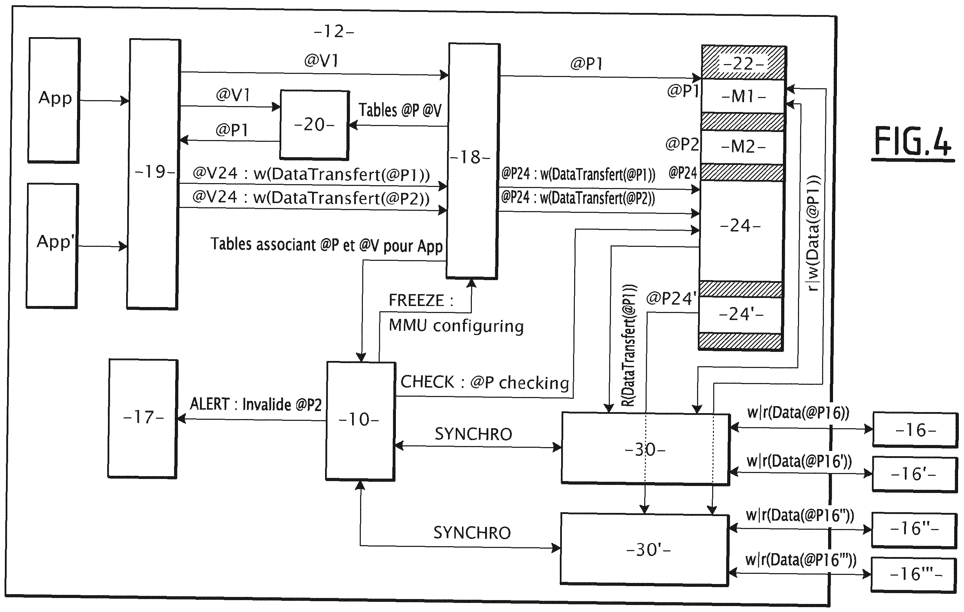

Le contrôleur d'interface 30 est propre à relier la plateforme 12 au périphérique matériel externe 16. Le contrôleur d'interface 30 est également propre à relier la plateforme 12 à d'autres périphériques matériels externes comme présenté sur la figure 4.

Le contrôleur d'interface 30 appartient à la plateforme 12.

En variante, le contrôleur d'interface 30 est intégré dans un applicatif App s'exécutant sur la plateforme 12.

Le fonctionnement du dispositif de contrôle 10 est maintenant décrit.

Initialement, le procédé de contrôle comprend une étape de fourniture au dispositif de contrôle 10 d'une politique de sécurité définissant les accès autorisés ou interdits aux zones mémoires M1, M2 pour l'applicatif App.

En complément, le dispositif de contrôle 10 interroge l'unité de gestion mémoire 18 pour déterminer si un accès à une zone mémoire M1, M2 est autorisé ou interdit.

Le procédé comprend également une étape de fourniture au dispositif de contrôle 10 d'une correspondance entre la valeur d'un champ du message et une adresse physique @P1, @P2 d'une zone mémoire M1, M2.

Le procédé comprend ensuite la réception du message par le dispositif de contrôle 10.

Ensuite, le dispositif de contrôle 10 convertit le corps du message en une ou plusieurs actions à effectuer sur une zone mémoire M1, M2.

Puis, le dispositif de contrôle 10 teste la conformité de chaque action avec la politique de sécurité comme décrit dans ce qui suit.

Le dispositif de contrôle 10 met en œuvre la fonction de vérification des messages de configuration des transferts, illustrée par la référence « CHECK » sur les figures 2 à 4.

La politique de sécurité définit, selon un ensemble de règles, la ou les actions autorisées ou interdites, de transfert de données vers ou depuis un périphérique externe 16 sur chaque zone mémoire M1, M2 pour l'applicatif App. Les actions sont, par exemple, la lecture d'une zone mémoire M1, M2 ou l'écriture sur une zone mémoire M1, M2 par le contrôleur d'interface 30.

La politique de sécurité comprend au moins l'une des règles suivantes parmi :
- une autorisation ou une interdiction, pour l'applicatif App, d'écriture ou de lecture sur des zones mémoires M1, M2 utilisées par le périphérique 16, et
- une autorisation ou une interdiction, pour le contrôleur d'interface 30, d'écriture ou de lecture sur des zones mémoires M1, M2 utilisées par le périphérique 16.

De telles règles sont éventuellement couplées à un paramètre liant chacune des règles à un identifiant du périphérique matériel externe 16 ou à une adresse d'une interface physique de la plateforme 12.

Ainsi, le dispositif de contrôle 10 adapte les règles de contrôle en fonction de l'interface physique sur laquelle le périphérique externe 16 est connecté.

Avantageusement, le dispositif 10 traite simultanément, plusieurs périphériques externes 16, plusieurs interfaces externes gérées par différents contrôleurs d'interface 30 ou encore exploite plusieurs structures de transfert 24 ou contrôle les autorisations d'accès pour plusieurs applicatifs App. La figure 4 est un exemple d'un tel mode d'utilisation du dispositif 10.

Dans les exemples des figures 1 à 4, la première zone mémoire M1 est autorisée en lecture et en écriture par le contrôleur d'interface 30 pour transfert vers le périphérique 16 et la deuxième zone mémoire M2 n'est autorisée ni en écriture ni en lecture par le contrôleur d'interface 30 pour transfert vers le périphérique 16.

Le procédé comprend, avantageusement, une étape de fourniture au dispositif de contrôle 10 de la structure 24.

La structure 24 comprend, par exemple, le nombre de zones mémoires M1, M2, le volume de données mémorisables sur chaque zone mémoire M1, M2 ou encore le volume de données mémorisées sur chaque zone mémoire M1, M2 ou encore l'association de chaque mémoire M1, M2 à une interface physique gérée par le contrôleur d'interface 30 ou l'identifiant du périphérique externe 16.

L'étape de fourniture au dispositif de contrôle 10 de la structure 24 peut concerner plusieurs structures 24 comme représenté sur la figure 4.

Puis, le procédé de contrôle comprend une étape de vérification par le dispositif de contrôle 10 du message et de réalisation d'une ou plusieurs actions de contrôle sur une zone mémoire M1, M2 pour le périphérique 16.

La vérification est effectuée au moyen d'une table de règles mémorisée dans une mémoire du dispositif de contrôle 10.L'étape de vérification permet de déterminer les actions non conformes avec la politique de sécurité, par exemple les actions relatives à l'écriture et/ou à la lecture d'une zone mémoire interdite.

Ensuite, le procédé de contrôle comprend une étape de verrouillage des messages de configuration contrôlés au sein de la structure 24 par le dispositif de contrôle 10.

Par exemple, l'étape de verrouillage est mise en œuvre par une configuration de l'unité de gestion mémoire 18 interdisant toute modification sur la zone mémoire M1, M2 dans laquelle le ou les messages contrôlés sont mémorisés. En variante, l'étape de verrouillage est réalisée par calcul du motif d'intégrité du ou des messages contrôlés. Le motif d'intégrité est optionnellement un motif cryptographique et est mémorisé dans une zone mémoire spécifique 25 accessible seulement par le dispositif 10.

Puis, le procédé comprend, lorsque l'action de verrouillage est réalisée, une étape de déverrouillage. Selon le choix de mise en œuvre de l'étape de verrouillage, le déverrouillage est mise en œuvre par
- une reconfiguration de l'unité de gestion mémoire 18 après que le contrôleur d'interface 30 ait réalisé le transfert du message sur la première zone mémoire M1, et
- un contrôle du motif d'intégrité avant le transfert du message sur la première zone mémoire M1 par le contrôleur d'interface 30.

Afin que les étapes de vérification et de verrouillage soient synchronisées, le dispositif 10 contrôle de manière permanente l'avancement des traitements du contrôleur d'interface 30 et, le cas échéant, suspend et relance les traitements du contrôleur d'interface 30.

Lorsque l'action de vérification détecte une non-conformité par rapport à la politique de sécurité, le dispositif de contrôle 10 interrompt le transfert. Le message n'est donc pas traité par le contrôleur d'interface 30 et le transfert n'est pas effectué.

Optionnellement, le dispositif de contrôle 10 fait remonter une alerte ou une notification permettant au système d'exploitation d'être informé de la non-conformité d'une action. Une telle alerte ou notification permet, par exemple, de détecter des attaques informatiques ou des dysfonctionnements et renforce donc la sécurité du transfert de données.

Ainsi, le dispositif de contrôle 10 assure une protection supplémentaire lors des transferts de messages par accès direct entre un applicatif App s'exécutant sur une plateforme 12 et des zones mémoires M1, M2 utilisés pour des transferts vers des périphériques matériels externes 16.

Dans un mode de réalisation avantageux, le dispositif de contrôle 10 met en œuvre les étapes suivantes.

Lorsque la structure 24 est définie et que le contrôleur d'interface 30 est sollicité par le pilote d'interface 19 pour initier le transfert, le pilote d'interface 19 communique au contrôleur d'interface 30, via des registres du contrôleur d'interface 30, l'adresse du premier message de configuration. Une telle adresse est, par exemple, notée « @ controler_init ».

Le dispositif 10 contrôle de manière permanente le contrôleur d'interface 30. Le dispositif 10 détecte ainsi l'activation du contrôleur d'interface 30 avec l'adresse @ controler_init.

Le dispositif 10 réalise alors les opérations d'initialisation suivantes :
∘ arrêt du contrôleur 30 qui ne traite donc pas la demande du pilote d'interface 19,
∘ analyse de la structure 24 et notamment des règles d'accès à la structure 24,
∘ vérification que l'adresse @ controler_init est définie dans les règles d'accès de la structure 24,
∘ vérification du message de configuration situé à l'adresse @ controler_init,
∘ réalisation optionnelle d'une vérification des messages de configuration situés à d'autres adresses, et
∘ si aucune alerte n'est détectée, redémarrage du contrôleur d'interface 30.

Comme suite aux opérations d'initialisation sur l'adresse @ controler_init, le dispositif 10 assure les opérations d'asservissement de la vérification des messages de configuration sur au moins une adresse de la structure 24. L'adresse de la structure 24 est, par exemple, notée « @ verify ». Pour cela, le dispositif de contrôle 10 contrôle :
∘ que l'adresse courante, notée « @ verify_current », du message de configuration à vérifier est strictement supérieure à l'adresse courante, notée « @ controler_current » du message de configuration à traiter par le contrôleur d'interface 30. Si cette propriété n'est pas vérifiée, le dispositif 10 stoppe le contrôleur d'interface 30 et réalise les opérations de vérification des messages de configuration jusqu'à ce que l'adresse courante « @ verify_current », du message de configuration à vérifier soit strictement supérieure à l'adresse courante « @ controler_current » du message de configuration à traiter par le contrôleur d'interface 30.
∘ que l'adresse courante @ verify_current du message de configuration à vérifier par le dispositif 10 est contenue strictement dans les règles d'accès à la structure 24. Si cette propriété n'est pas vérifiée, le dispositif 10 génère une alerte.
∘ que l'écart entre l'adresse courante @ controler_current du message de configuration à traiter par le contrôleur d'interface 30 et l'adresse de configuration du message de configuration que le contrôleur d'interface 30 a précédemment traitée, notée « @ controler_previous » est strictement égale à une unité d'adresse dans les règles d'accès de la structure 24. Si cette propriété n'est pas vérifiée, le dispositif 10 recommence les opérations d'initialisation sur l'adresse @ controler_init décrite précédemment en considérant que l'adresse @ controler_init est égale à l'adresse courante @ controler_current.

La mise en œuvre du procédé est simple à réaliser en pratique puisqu'aucune modification des processeurs, des périphériques matériels et des logiciels applicatifs existants n'est à effectuer.

Le procédé peut donc être intégré à de nombreux types d'architectures s'appuyant aussi bien matérielles que logicielles sans avoir à les modifier.

Ainsi, le procédé permet de couvrir les risques de fuites de données lors des échanges avec des périphériques externes.

Le dispositif de contrôle 10 est indépendant de la plateforme 12 et du périphérique matériel 16.

En outre, le dispositif de contrôle 10 est réalisable sous forme de matériel ou de logiciel. Le dispositif de contrôle 10 est de plus configurable ce qui permet de prendre en compte facilement de nouvelles attaques et/ou menaces.

L'homme du métier comprendra que l'invention ne se limite pas à au mode de réalisation décrit sur la figure 1, ni aux exemples particuliers de la description. Une autre variante consiste, par exemple, à combiner un ou plusieurs exemples décrits précédemment.

## Revendications

1. Procédé de contrôle systématique par un dispositif de contrôle (10) d'au moins un message de configuration de transfert, le message de configuration de transfert étant un message de configuration d'un transfert par accès direct depuis un applicatif (App) s'exécutant sur une plateforme (12) vers une zone mémoire (M1, M2) utilisée par au moins un périphérique matériel externe (16), la plateforme (12) comprenant une ou plusieurs interfaces physiques, le périphérique (16) étant relié à la plateforme (12) via une ou plusieurs interfaces physiques de la plateforme (12), le périphérique (16) utilisant une pluralité de zones mémoires (M1, M2), chaque zone mémoire (M1, M2) étant **caractérisée par** une adresse physique unique (@P1, @P2), le message de configuration d'un transfert comprenant au moins un champ et un corps, le champ référençant une adresse physique d'une zone mémoire (M1, M2), le dispositif de contrôle (10) appartenant à la plateforme (12) et mettant en œuvre au moins l'une des fonctions suivantes :
- une fonction de vérification (CHECK),
- une fonction de synchronisation (SYNCHRO),
- une fonction de verrouillage (FREEZE),
- une fonction d'alerte (ALERT), et
- une fonction de configuration du dispositif de contrôle (10) avec une politique de sécurité,
le procédé étant mis en œuvre par le dispositif de contrôle (10) et comprenant au moins les étapes suivantes :
- fourniture au dispositif de contrôle (10) d'une politique de sécurité définissant les adresses des zones mémoires (M1, M2) autorisées pour l'applicatif (App),
- fourniture au dispositif de contrôle (10) d'une correspondance entre la valeur d'un champ du message et une adresse physique (@P1, @P2) d'une zone mémoire (M1, M2),
- fourniture d'une structure (24) de contrôle des transferts dans laquelle le message de configuration est propre à être mémorisé, la structure (24) étant utilisée pour réaliser des transferts de données sur une première zone mémoire (M1), respectivement sur une deuxième zone mémoire (M2), par accès direct à une adresse physique (@P1) de la première zone mémoire (M1), respectivement à une adresse physique (@P2) de la deuxième zone mémoire (M2), référencées dans la structure (24),
- réception du message par le dispositif de contrôle (10),
- conversion par le dispositif de contrôle (10) du corps du message en une ou plusieurs actions à effectuer sur une zone mémoire (M1, M2), et
- test par le dispositif de contrôle (10) de la conformité de chaque action avec la politique de sécurité et émission d'une notification lorsqu'une action n'est pas conforme avec la politique de sécurité.

2. Procédé selon la revendication 1, dans lequel la plateforme (12) comprend un hyperviseur, le dispositif de contrôle (10) faisant partie de l'hyperviseur.

3. Procédé selon la revendication 1 ou 2, dans lequel la structure (24) est également utilisée lors de la mise en œuvre du test de conformité.

4. Procédé selon l'une quelconque des revendications 1 à 3, dans lequel la politique de sécurité comprend au moins l'une des règles suivantes :
- autorisation d'écriture sur des zones mémoires (M1, M2) utilisées par le périphérique (16),
- interdiction d'écriture sur des zones mémoires (M1, M2) utilisées par le périphérique (16),
- autorisation de lecture de zones mémoires (M1, M2) utilisées par le périphérique (16), et
- interdiction de lecture de zones mémoires (M1, M2) utilisées par le périphérique (16).

5. Procédé selon l'une quelconque des revendications 1 à 4, dans lequel le périphérique (16) est relié à la plateforme (12) via un protocole USB ou un protocole Ethernet.

6. Procédé selon l'une quelconque des revendications 1 à 5, la plateforme (12) comprenant un contrôleur d'interface (30) en aval du dispositif de contrôle (10) et propre à effectuer la ou les actions, le procédé comprenant également au moins l'une des étapes suivantes :
- si l'action testée est conforme avec la politique de sécurité, le message est communiqué au contrôleur d'interface (30) et l'action est effectuée, et
- si l'action testée n'est pas conforme avec la politique de sécurité, le message n'est pas communiqué au contrôleur d'interface (30) et l'action n'est pas effectuée.

7. Procédé selon la revendication 6, dans lequel le contrôleur d'interface (30) appartient à la plateforme (12) ou est intégré dans un applicatif (App) s'exécutant sur la plateforme (12).

8. Dispositif de contrôle (10) adapté pour la mise en œuvre d'un procédé de contrôle systématique par un dispositif de contrôle (10) d'au moins un message de configuration de transfert, le message de configuration de transfert étant un message de configuration d'un transfert par accès direct depuis un applicatif (App) s'exécutant sur une plateforme (12) vers une zone mémoire (M1, M2) utilisée par au moins un périphérique matériel externe (16), la plateforme (12) comprenant une ou plusieurs interfaces physiques, le périphérique (16) étant relié à la plateforme (12) via une ou plusieurs interfaces physiques de la plateforme (12), le périphérique (16) utilisant une pluralité de zones mémoires (M1, M2), chaque zone mémoire (M1, M2) étant **caractérisée par** une adresse physique unique (@P1, @P2), le message de configuration d'un transfert comprenant au moins un champ et un corps, le champ référençant une adresse physique d'une zone mémoire (M1, M2), le dispositif de contrôle (10) appartenant à la plateforme (12) et mettant en œuvre au moins l'une des fonctions suivantes :
- une fonction de vérification (CHECK),
- une fonction de synchronisation (SYNCHRO),
- une fonction de verrouillage (FREEZE),
- une fonction d'alerte (ALERT), et
- une fonction de configuration du dispositif de contrôle (10) avec une politique de sécurité,
le dispositif de contrôle (10) étant propre à mettre en œuvre au moins les étapes suivantes :
- réception d'une politique de sécurité définissant les adresses des zones mémoires (M1, M2) autorisées pour l'applicatif (App),
- réception d'une correspondance entre la valeur d'un champ du message et une adresse physique (@P1, @P2) d'une zone mémoire (M1, M2),
- réception d'une structure (24) de contrôle des transferts dans laquelle le message de configuration est propre à être mémorisé, la structure (24) étant utilisée pour réaliser des transferts de données sur une première zone mémoire (M1), respectivement sur une deuxième zone mémoire (M2), par accès direct à une adresse physique (@P1) de la première zone mémoire (M1), respectivement à une adresse physique (@P2) de la deuxième zone mémoire (M2), référencées dans la structure (24),
- réception du message,
- conversion du corps du message en une ou plusieurs actions à effectuer sur une zone mémoire (M1, M2), et
- test de la conformité de chaque action avec la politique de sécurité et émission d'une notification lorsqu'une action n'est pas conforme avec la politique de sécurité.

9. Produit programme d'ordinateur comportant des instructions logicielles, les instructions logicielles mettant en œuvre un procédé selon l'une quelconque des revendications 1 à 7, lorsque les instructions logicielles sont exécutées par une plateforme.

10. Support d'informations sur lequel est mémorisé un produit programme d'ordinateur selon la revendication 9.

## Patentansprüche

1. Verfahren zur systematischen Prüfung durch eine Prüfungseinrichtung (10) von mindestens einer Übertragungskonfigurationsnachricht, wobei die Übertragungskonfigurationsnachricht eine Nachricht zur Konfiguration einer Übertragung durch direkten Zugriff von einer Anwendung (App), welche auf einer Plattform (12) ausgeführt wird, auf einen Speicherbereich (M1, M2), welcher durch mindestens ein externes materielles Peripheriegerät (16) genutzt wird, ist, wobei die Plattform (12) eine oder mehrere physische Schnittstellen aufweist, wobei das Peripheriegerät (16) mit der Plattform (12) über eine oder mehrere physische Schnittstellen der Plattform (12) verbunden ist, wobei das Peripheriegerät (16) eine Mehrzahl von Speicherbereichen (M1, M2) nutzt, wobei jeder Speicherbereich (M1, M2) durch eine einzigartige physische Adresse (@P1, @P2) gekennzeichnet ist, wobei die Nachricht zur Konfiguration einer Übertragung mindestens ein Feld und einen Körper aufweist, wobei das Feld eine physische Adresse eines Speicherbereichs (M1, M2) referenziert, wobei die Prüfungseinrichtung (10) zur Plattform (12) gehört und mindestens eine der folgenden Funktionen durchführt:
- eine Funktion zur Verifikation (CHECK),
- eine Funktion zur Synchronisation (SYNCHRO),
- eine Funktion zur Sperrung (FREEZE),
- eine Funktion zur Warnung (ALERT), und
- eine Funktion zum Einrichten der Prüfungseinrichtung (10) mit einer Sicherheitspolitik,
wobei das Verfahren durch die Prüfungseinrichtung (10) durchgeführt wird und mindestens die folgenden Schritte aufweist:
- Bereitstellen, an die Prüfungseinrichtung (10), einer Sicherheitspolitik, welche die Adressen der Speicherbereiche (M1, M2), die für die Anwendung (App) zugelassen sind, definiert,
- Bereitstellen, an die Prüfungseinrichtung (10), einer Zuordnung zwischen dem Wert eines Felds der Nachricht und einer physischen Adresse (@P1, @P2) eines Speicherbereichs (M1, M2),
- Bereitstellen einer Struktur (24) zum Prüfen von Übertragungen, in welcher die Konfigurationsnachricht speicherbar ist, wobei die Struktur (24) dazu genutzt wird, die Datenübertragungen auf einen ersten Speicherbereich (M1) bzw. auf einen zweiten Speicherbereich (M2) durch direkten Zugriff auf eine physische Adresse (@P1) des ersten Speicherbereichs (M1) bzw. auf eine physische Adresse (@P2) des zweiten Speicherbereichs (M2), welche durch die Struktur (24) referenziert werden, zu realisieren,
- Empfangen einer Nachricht durch die Prüfungseinrichtung (10),
- Umwandeln, durch die Prüfungseinrichtung (10), des Körpers der Nachricht in eine oder mehrere an einem Speicherbereich (M1, M2) vorzunehmende Aktionen, und
- Prüfen, durch die Prüfungseinrichtung (10), der Konformität jeder Aktion mit der Sicherheitspolitik und Ausgeben einer Benachrichtigung, wenn eine Aktion nicht mit der Sicherheitspolitik im Einklang steht.

2. Verfahren gemäß dem Anspruch 1, wobei die Plattform (12) einen Hypervisor aufweist, wobei die Prüfungseinrichtung (10) einen Teil des Hypervisors bildet.

3. Verfahren gemäß dem Anspruch 1 oder 2, wobei die Struktur (24) zugleich bei der Durchführung der Konformitätsprüfung genutzt wird.

4. Verfahren gemäß irgendeinem der Ansprüche 1 bis 3, wobei die Sicherheitspolitik mindestens eine der folgenden Regeln aufweist:
- Autorisierung des Schreibens auf die Speicherbereiche (M1, M2), welche durch das Peripheriegerät (16) genutzt werden,
- Verbot des Schreibens auf die Speicherbereiche (M1, M2), welche durch das Peripheriegerät (16) genutzt werden,
- Autorisierung des Lesens der Speicherbereiche (M1, M2), welche durch das Peripheriegerät (16) genutzt werden, und
- Verbot des Lesens der Speicherbereiche (M1, M2), welche durch das Peripheriegerät (16) genutzt werden.

5. Verfahren gemäß irgendeinem der Ansprüche 1 bis 4, wobei das Peripheriegerät (16) mit der Plattform (12) über ein USB-Protokoll oder ein Ethernet-Protokoll verbunden ist.

6. Verfahren gemäß irgendeinem der Ansprüche 1 bis 5, wobei die Plattform eine Schnittstellen-Steuereinrichtung (30) aufweist, welche der Prüfungseinrichtung (10) nachgeschaltet ist und dazu eingerichtet ist, die Aktion oder die Aktionen vorzunehmen, wobei das Verfahren zugleich mindestens einen der folgenden Schritte aufweist:
- falls die geprüfte Aktion mit der Sicherheitspolitik im Einklang ist, wird die Nachricht an die Schnittstellen-Steuereinrichtung (30) kommuniziert und wird die Aktion vorgenommen, und
- falls die geprüfte Aktion nicht mit der Sicherheitspolitik im Einklang ist, wird die Nachricht nicht an die Schnittstellen-Steuereinrichtung (30) kommuniziert und wird die Aktion nicht vorgenommen.

7. Verfahren gemäß dem Anspruch 6, wobei die Schnittstellen-Steuereinrichtung (30) zu der Plattform (12) gehört oder in eine Anwendung (App), welche auf der Plattform (12) ausgeführt wird, gehört.

8. Prüfungseinrichtung (10), welche dazu eingerichtet ist, ein Verfahren zur systematischen Prüfung von mindestens einer Übertragungskonfigurationsnachricht mittels einer Prüfungseinrichtung (10) durchzuführen, wobei die Übertragungskonfigurationsnachricht eine Nachricht zur Konfiguration einer Übertragung durch direkten Zugriff von einer Anwendung (App), welche auf einer Plattform (12) ausgeführt wird, auf einen Speicherbereich (M1, M2), welcher durch mindestens ein externes materielles Peripheriegerät (16) genutzt wird, ist, wobei die Plattform (12) eine oder mehrere physische Schnittstellen aufweist, wobei das Peripheriegerät (16) mit der Plattform (12) über eine oder mehrere physische Schnittstellen der Plattform (12) verbunden ist, wobei das Peripheriegerät (16) eine Mehrzahl von Speicherbereichen (M1, M2) nutzt, wobei jeder Speicherbereich (M1, M2) durch eine einzigartige physische Adresse (@P1, @P2) gekennzeichnet ist, wobei die Nachricht zur Konfiguration einer Übertragung mindestens ein Feld und einen Körper aufweist, wobei das Feld eine physische Adresse eines Speicherbereichs (M1, M2) referenziert, wobei die Prüfungseinrichtung (10) zur Plattform (12) gehört und mindestens eine der folgenden Funktionen durchführt:
- eine Funktion zur Verifikation (CHECK),
- eine Funktion zur Synchronisation (SYNCHRO),
- eine Funktion zur Sperrung (FREEZE),
- eine Funktion zur Warnung (ALERT), und
- eine Funktion zum Einrichten der Prüfungseinrichtung (10) mit einer Sicherheitspolitik,
wobei die Prüfungseinrichtung (10) dazu geeignet ist, mindestens die folgenden Schritte durchzuführen:
- Empfangen einer Sicherheitspolitik, welche die Adressen der Speicherbereiche (M1, M2), die für die Anwendung (App) zugelassen sind, definiert,
- Empfangen einer Zuordnung zwischen dem Wert eines Felds der Nachricht und einer physischen Adresse (@P1, @P2) eines Speicherbereichs (M1, M2),
- Empfangen einer Struktur (24) zum Prüfen von Übertragungen, in welcher die Konfigurationsnachricht speicherbar ist, wobei die Struktur (24) dazu genutzt wird, die Datenübertragungen auf einen ersten Speicherbereich (M1) bzw. auf einen zweiten Speicherbereich (M2) durch direkten Zugriff auf eine physische Adresse (@P1) des ersten Speicherbereichs (M1) bzw. auf eine physische Adresse (@P2) des zweiten Speicherbereichs (M2), welche durch die Struktur (24) referenziert werden, zu realisieren,
- Empfangen der Nachricht,
- Umwandeln des Körpers der Nachricht in eine oder mehrere an einem Speicherbereich (M1, M2) vorzunehmende Aktionen, und
- Prüfen der Konformität jeder Aktion mit der Sicherheitspolitik und Ausgeben einer Benachrichtigung, wenn eine Aktion nicht mit der Sicherheitspolitik im Einklang steht.

9. Computerprogrammprodukt, welches logische Befehle aufweist, wobei die logischen Befehle ein Verfahren gemäß irgendeinem der Ansprüche 1 bis 7 umsetzen, wenn die logischen Befehle durch eine Plattform ausgeführt werden.

10. Speichermedium, auf welchem ein Computerprogrammprodukt gemäß dem Anspruch 9 gespeichert ist.

## Claims

1. Method for systematic control by a device (10) for controlling at least one transfer configuration message, the transfer configuration message being a message for configuration of a transfer by direct access from an application (App) being performed on a platform (12) towards a memory zone (M1, M2) used by at least one external material peripheral unit (16), the platform (12) comprising one or more physical interfaces, the peripheral unit (16) being connected to the platform (12) via one or more physical interfaces of the platform (12), the peripheral unit (16) using a plurality of memory zones (M1, M2), each memory zone (M1, M2) being **characterised by** a unique physical address (@P1, @P2), the message for configuration of a transfer comprising at least one field and one body, the field referencing a physical address of a memory zone (M1, M2), the control device (10) belonging to the platform (12) and implementing at least one of the following functions:
- a verification function (CHECK),
- a synchronisation function (SYNCHRO),
- a locking function (FREEZE),
- an alert function (ALERT), and
- a function for configuration of the control device (10) with a security policy,
the method being implemented by the control device (10) and comprising at least the following steps:
- providing for the control device (10) a security policy defining the addresses of the memory zones (M1, M2) authorised for the application (App),
- providing for the control device (10) a correspondence between the value of a field of the message and a physical address (@P1, @P2) of a memory zone (M1, M2),
- providing a structure (24) for controlling transfers in which the configuration message is able to be stored, the structure (24) being used in order to produce data transfers on a first memory zone (M1), respectively on a second memory zone (M2), by direct access to a physical address (@P1) of the first memory zone (M1), respectively to a physical address (@P2) of the second memory zone (M2), referenced in the structure (24),
- receipt of the message by the control device (10),
- conversion by the control device (10) of the body of the message into one or more actions to be effected on a memory zone (M1, M2), and
- test by the control device (10) of the conformity of each action with the security policy and issue of a notification when an action is not according to the security policy.

2. Method according to claim 1, in which the platform (12) comprises a hypervisor, the control device (10) being part of the hypervisor.

3. Method according to claim 1 or 2, in which the structure (24) is likewise used during implementation of the conformity test.

4. Method according to any of the claims 1 to 3, in which the security policy comprises at least one of the following rules:
- authorisation to write on memory zones (M1, M2) used by the peripheral unit (16),
- ban on writing on memory zones (M1, M2) used by the peripheral unit (16),
- authorisation to read memory zones (M1, M2) used by the peripheral unit (16), and
- ban on reading memory zones (M1, M2) used by the peripheral unit (16).

5. Method according to any of the claims 1 to 4, in which the peripheral unit (16) is connected to the platform (12) via a USB protocol or an Ethernet protocol.

6. Method according to any of the claims 1 to 5, the platform (12) comprising an interface controller (30) which is upstream of the control device (10) and able to effect the action or actions, the method likewise comprising at least one of the following steps:
- if the tested action is according to the security policy, the message is communicated to the interface controller (30) and the action is effected, and
- if the tested action is not according to the security policy, the message is not communicated to the interface controller (30) and the action is not effected.

7. Method according to claim 6, in which the interface controller (30) belongs to the platform (12) or is integrated in an application (App), being performed on the platform (12).

8. Control device (10) adapted for implementing a systematic control method by a device (10) for controlling at least one transfer configuration message, the transfer configuration message being a message for configuration of a transfer by direct access from an application (App) being performed on a platform (12) towards a memory zone (M1, M2) used by at least one external material peripheral unit (16), the platform (12) comprising one or more physical interfaces, the peripheral unit (16) being connected to the platform (12) via one or more physical interfaces of the platform (12), the peripheral unit (16) using a plurality of memory zones (M1, M2), each memory zone (M1, M2) being **characterised by** a unique physical address (@P1, @P2), the message for configuration of a transfer comprising at least one field and one body, the field referencing a physical address of a memory zone (M1, M2), the control device (10) belonging to the platform (12) and implementing at least one of the following functions:
- a verification function (CHECK),
- a synchronisation function (SYNCHRO),
- a locking function (FREEZE),
- an alert function (ALERT), and
- a function for configuration of the control device (10) with a security policy,
the control device (10) being able to implement at least the following steps:
- receipt of a security policy defining the addresses of the memory zones (M1, M2) authorised for the application (App),
- receipt of a correspondence between the value of a field of the message and a physical address (@P1, @P2) of a memory zone (M1, M2),
- receipt of a structure (24) for controlling transfers in which the configuration message is able to be stored, the structure (24) being used to produce data transfers on a first memory zone (M1), respectively on a second memory zone (M2), by direct access to a physical address (@P1) of the first memory zone (M1), respectively to a physical address (@P2) of the second memory zone (M2), referenced in the structure (24),
- receipt of the message,
- conversion of the body of the message into one or more actions to be effected on a memory zone (M1, M2), and
- test for the conformity of each action with the security policy and issue of a notification when an action is not according to the security policy.

9. Computer programming product comprising software instructions, the software instructions implementing a method according to any of the claims 1 to 7, when the software instructions are performed by a platform.

10. Data support on which a computer programming product according to claim 9 is stored.
